# EUROPEAN PATENT APPLICATION

(11) **EP 4 601 028 A1**
(43) Date of publication of application: **13.08.2025**
(21) Application number: 23874702.6
(22) Date of filing: 25.09.2023
(51) Int. Cl.: H01M 4/139, B05D 3/00, B05D 3/06, B05D 3/12, B05D 5/12, B05D 7/00, B05D 7/14, H01M 4/62

(54) **METHOD FOR PRODUCING ELECTRODE LAYER**

(30) Priority: 03.10.2022 JP 2022159831
(71) Applicant: FUJIFILM Corporation, Tokyo 106-8620 (JP)
(72) Inventor: ICHIKAWA, Kenji, Minamiashigara-shi, Kanagawa 250-0193 (JP); IWASE, Eijiro, Minamiashigara-shi, Kanagawa 250-0193 (JP); ITO, Hisateru, Minamiashigara-shi, Kanagawa 250-0193 (JP)
(74) Representative: Meissner Bolte Partnerschaft mbB
(86) International application number: PCT/JP2023/034789
(87) International publication number: WO 2024/075574

(57) **Abstract**

Provided is a manufacturing method of an electrode layer, including a step A of forming an electrode material film on a collector foil, where the collector foil is transported using a transport member in which a plurality of pallets are connected in one direction, along a connection direction of the pallets, a step B of spacing the connected pallets apart from each other to divide a laminate of the collector foil and the electrode material film for each one pallet, and a step C of transporting the pallet on which the divided laminate of the collector foil and the electrode material film is placed along the connection direction of the pallets, and measuring a density and a thickness of the electrode material film using an X-ray examination device.

## Description

### BACKGROUND OF THE INVENTION

### 1. Field of the Invention

The present disclosure relates to a manufacturing method of an electrode layer.

### 2. Description of the Related Art

In recent years, development of a semi-solid state battery has been studied.

An electrode applied to the semi-solid state battery is manufactured using, for example, an electrode material containing at least an electrode active material which is a powder and an electrolytic solution.

As a method applied to a manufacturing process of the semi-solid state battery, for example, JP2021-530826A discloses a method including: continuously distributing a semi-solid electrode slurry on a collector; separating the semi-solid electrode slurry into separate portions; and cutting the collector to form a completed electrode.

In addition, JP2019-212461A discloses an electrode manufacturing method of manufacturing an electrode having an active material layer on at least one surface of a collector, the electrode manufacturing method including: a cutting step of cutting a sheet member to form individual pieces of an electrode; a pressing step of pressing the individual pieces of the electrode using a press roll; and a distance measurement step of determining intersections of a plurality of sides and measuring a distance between the intersections for the individual pieces of the electrode transported after being pressed in the pressing step.

### SUMMARY OF THE INVENTION

As disclosed in JP2021-530826A and JP2019-212461A above, there is a method of cutting an electrode layer together with a collector to form a rectangular shape. Specific examples of the method include a method of forming an electrode material film on a collector foil which is placed on a transport member formed by connecting a plurality of pallets, and then spacing the pallets to rectangularize the electrode material film together with the collector foil.

In the method, depending on a film forming method and conditions thereof, a distribution may occur in the thickness and the density of the electrode material film. In addition, depending on conditions for spacing the pallets, a change in thickness or density may occur at an end part of the electrode material film.

Therefore, the present disclosure has been made in view of the above-described circumstances.

An object of one embodiment of the present disclosure is to provide a manufacturing method of an electrode layer having an electrode material film, in which in-plane uniformity of a density and a thickness of the electrode material film can be grasped.

Here, the "electrode layer" means a laminate of a collector foil and the electrode material film.

The present disclosure includes the following aspects.
<1> A manufacturing method of an electrode layer, including:
   a step A of forming an electrode material film on a collector foil, where the collector foil is transported using a transport member in which a plurality of pallets are connected in one direction, along a connection direction of the pallets;
   a step B of spacing the connected pallets apart from each other to divide a laminate of the collector foil and the electrode material film for each one pallet; and
   a step C of transporting the pallet on which the divided laminate of the collector foil and the electrode material film is placed along the connection direction of the pallets, and measuring a density and a thickness of the electrode material film using an X-ray examination device.
<2> The manufacturing method of an electrode layer according to <1>,
   in which the pallet is a laminate of a porous carbon layer in which one surface is a contact surface with the collector foil, and a carbon fiber composite material layer.
<3> The manufacturing method of an electrode layer according to <1> or <2>,
   in which a total thickness of the pallet is 5 mm to 50 mm.
<4> The manufacturing method of an electrode layer according to any one of <1> to <3>,
   in which information on the thickness and the density of the electrode material film, obtained by the X-ray examination device, provides feedback to at least one of the step A or the step B.
<5> The manufacturing method of an electrode layer according to <4>,
   in which at least one of a film forming condition for the electrode material film in the step A or a spacing condition between the pallets in the step B is controlled based on the feedback information.
<6> The manufacturing method of an electrode layer according to any one of <1> to <5>,
   in which the electrode material film contains an electrode active material, a conductive auxiliary agent, and an electrolytic solution, has a thickness of 50 µm to 500 µm, and has a concentration of solid components of 30% by volume to 90% by volume.

According to one embodiment of the present disclosure, it is possible to provide a manufacturing method of an electrode layer having an electrode material film, in which in-plane uniformity of a density and a thickness of the electrode material film can be grasped.

### BRIEF DESCRIPTION OF THE DRAWINGS

Fig. 1 is a schematic cross-sectional view for describing an example of a step A to a step C in a manufacturing method of an electrode layer according to the present disclosure.
Fig. 2 is a schematic cross-sectional view for describing an example of a pallet used in the manufacturing method of an electrode layer according to the present disclosure.
Fig. 3 is a schematic cross-sectional view for describing an example of a transport member used in the manufacturing method of an electrode layer according to the present disclosure.

### DESCRIPTION OF THE PREFERRED EMBODIMENTS

Hereinafter, embodiments of the present disclosure will be described with reference to the accompanying drawings. The present disclosure is not limited in any way to the following embodiments, and may be implemented with appropriate modifications within the scope of the purpose of the present disclosure. The constituent elements indicated by the same reference numeral in each drawing mean the same constituent element. The description of redundant constitutional elements and reference numerals in each drawing may be omitted. A dimensional ratio in the drawings does not necessarily represent the actual dimensional ratio.

In the present disclosure, the numerical ranges shown using "to" indicate ranges including the numerical values described before and after "to" as the lower limit value and the upper limit value. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, a term "step" denotes not only an individual step but also a step which is not clearly distinguishable from another step as long as an effect expected from the step can be achieved.

In the present disclosure, in a case where a plurality of substances corresponding to each component in a composition is present, the amount of each component in the composition means the total amount of the plurality of substances present in the composition, unless otherwise specified.

In the present disclosure, a combination of two or more preferred aspects or forms is a more preferred aspect or form.

In the present disclosure, "solid component" means a component in a solid state at 25°C and 1 atm, and "liquid component" means a component in a liquid state at 25°C and 1 atm.

### <Manufacturing method of electrode layer>

The manufacturing method of an electrode layer according to the present disclosure includes a step A of forming an electrode material film on a collector foil, where the collector foil is transported using a transport member in which a plurality of pallets are connected in one direction, along a connection direction of the pallets, a step B of spacing the connected pallets apart from each other to divide a laminate of the collector foil and the electrode material film for each one pallet, and a step C of transporting the pallet on which the divided laminate of the collector foil and the electrode material film is placed along the connection direction of the pallets, and measuring a density and a thickness of the electrode material film using an X-ray examination device.

In the present disclosure, it is preferable that the electrode material film contains an electrode active material, a conductive auxiliary agent, and an electrolytic solution, has a thickness of 50 µm to 500 µm, and has a concentration of solid components of 30% by volume to 90% by volume. That is, in the manufacturing method of an electrode layer according to the present disclosure, it is preferable to form, on a collector foil, an electrode material film having a thickness of 50 µm to 500 µm and a concentration of solid components of 30% by volume to 90% by volume.

Here, the thickness of the electrode material film is measured by the X-ray examination device in the step C. The thickness of the electrode material film is an arithmetic average value of measured values measured by the X-ray examination device.

In addition, the concentration of solid components of the electrode material film is calculated from the density measured by the X-ray examination device in the step C and a compositional ratio of each component contained in the electrode material film.

As described above, in the method of forming an electrode material film on a collector foil placed on a transport member which is formed by connecting a plurality of pallets, and then spacing the pallets from each other to rectangularize the electrode material film together with the collector foil, there may be a distribution in thickness and density of the electrode material film.

Therefore, it has been considered to examine the thickness and the density of the electrode material film with the X-ray examination device. However, in a case where the electrode material film is moved from the pallet during the examination with the X-ray examination device, vibration or the like at this time may cause collapse or the like, and thus the thickness and the density of the electrode material film may be changed. Therefore, a method of examining the formed electrode material film without changing the thickness and the density is desired.

Therefore, the present inventors have found a method of applying the laminate of the collector foil and the electrode material film to the X-ray examination device while the laminate is placed on the pallet, as in the above-described manufacturing method of an electrode layer according to the present disclosure.

In the manufacturing method of an electrode layer according to the present disclosure, as described in the above-described step C, in a case of being applied to the examination with the X-ray examination device, the collapse or the like of the electrode material film is suppressed, and the thickness and the density of the electrode material film are measured by the X-ray examination device, whereby it is possible to grasp in-plane uniformity of the density and thickness of the electrode material film. In the manufacturing method of an electrode layer according to the present disclosure, since information on the density and the thickness of the electrode material film can be obtained, the information can provide feedback to at least one of the step A or the step B, and for example, at least one of a film forming condition for the electrode material film in the step A or a spacing condition between the pallets in the step B can be controlled based on the feedback information, whereby it is possible to form an electrode material film having excellent in-plane uniformity of the density and the thickness.

JP2021-530826A discloses a method of measuring the thickness of the electrode material film using a non-contact measurement technique, but does not disclose the X-ray examination device. In addition, JP2019-212461A discloses a technique in which the electrode material film is formed on the collector foil to be rectangularized, and then the thickness of the electrode layer is measured by a thickness measuring unit, but it is necessary to transfer the rectangularized electrode layer to a transporting unit which transports the rectangularized electrode layer to the thickness measuring unit.

Hereinafter, each step in the manufacturing method of an electrode layer according to the present disclosure will be described.

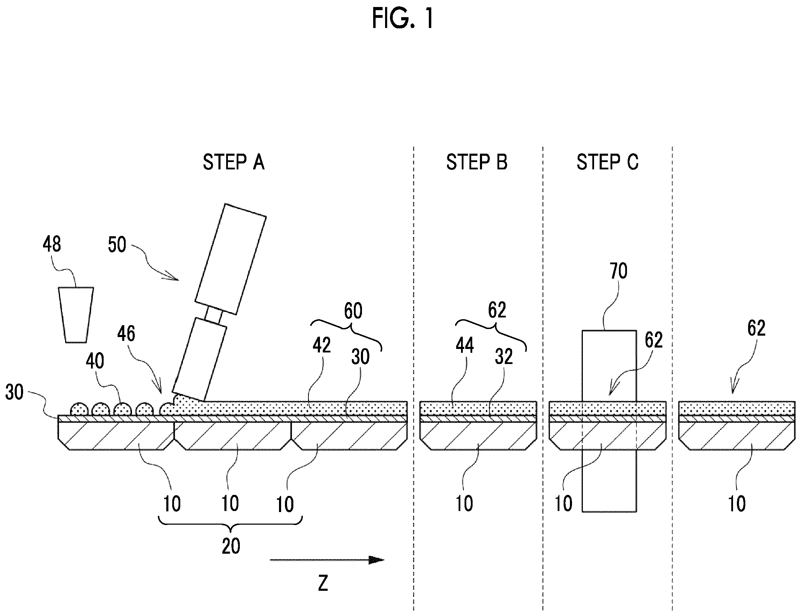

An example of the step A to the step C will be described with reference to Fig. 1.

As shown in Fig. 1, in the step A, an electrode material film 42 is formed on a collector foil 30 which is transported using a transport member 20 along a connection direction (Z direction in Fig. 1) of pallets 10 of the transport member 20, in which a plurality of the pallets 10 are connected in one direction. As a result, a laminate 60 of the collector foil 30 and the electrode material film 42 is formed on the pallets 10 of the transport member 20. The Z direction in Fig. 1 also corresponds to a transport direction of the collector foil 30, the pallets 10, the transport member 20 obtained by connecting the pallets 10, and the like.

Next, in the step B, the connected pallets 10 are spaced apart from each other in the Z direction, and the laminate 60 of the collector foil 30 and the electrode material film 42 is divided for each pallet 10. As a result, the pallet 10 on which a divided laminate 62 of a current collector foil 32 and an electrode material film 44 is placed is obtained.

Subsequently, in the step C, the pallet 10 on which the divided laminate 62 of the collector foil 32 and the electrode material film 44 is placed is transported along the connection direction of the pallets (that is, the Z direction), and the density and the thickness of the electrode material film 44 are measured using an X-ray examination device 70.

Hereinafter, each of the step A to the step C will be described.

### [Step A]

In the step A, the electrode material film is formed on the collector foil which is transported along the connection direction of the pallets using the transport member, in which a plurality of the pallets are connected in one direction.

### (Pallet and transport member)

The pallet and the transport member used in the step A will be described.

It is desirable that the pallet has a mechanical strength as a transport member, adsorptivity of the collector foil, a mechanical strength required in a case of forming an electrode material film, and X-ray transmittance obtained in the step C described later.

The pallet having the above-described characteristics is preferably a laminate of a porous carbon layer in which one surface is a contact surface with the collector foil, and a carbon fiber composite material layer.

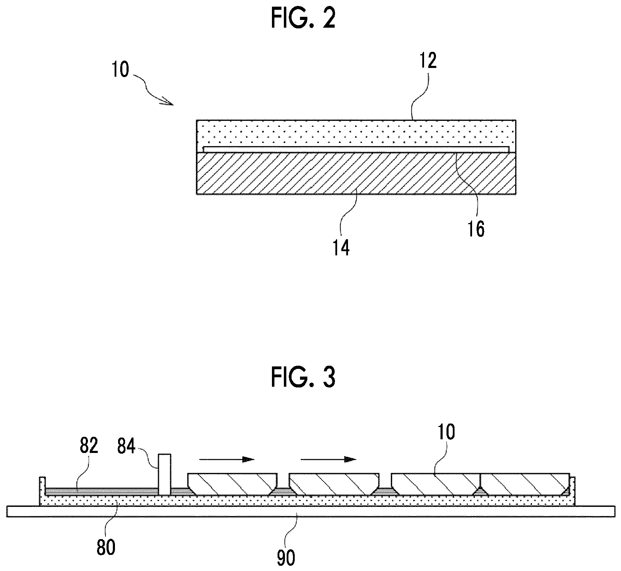

The pallet which is the laminate of the porous carbon layer and the carbon fiber composite material layer will be described with reference to Fig. 2.

The pallet 10 shown in Fig. 2 is a laminate of a porous carbon layer 12 and a carbon fiber composite material layer 14, and further has a void portion 16 adjacent to the porous carbon layer 12.

In the pallet 10 shown in Fig. 2, an exposed surface of the porous carbon layer 12 (that is, a surface opposite to a surface on the carbon fiber composite material layer 14 side) is the contact surface with the collector foil.

In the following description, reference numerals will be omitted.

The porous carbon layer included in the pallet is also called porous carbon, and is a layer having continuous (connected) air pores in a carbon material. Therefore, by reducing a pressure in the air pores in the porous carbon layer, the collector foil placed on the porous carbon layer can be adsorbed. Therefore, as described above, the exposed surface of the porous carbon layer is the contact surface with the collector foil.

In addition, since the porous carbon layer contains a carbon material, the porous carbon layer is lightweight, has high mechanical strength, and has X-ray transmittance.

From the viewpoint of adsorptivity of the collector foil and viewpoint of mechanical strength and X-ray transmittance, a pore diameter in the porous carbon layer is preferably 100 nm to 5,000 nm and more preferably 300 nm to 500 nm.

In addition, viewpoint of adsorptivity of the collector foil and viewpoint of mechanical strength and X-ray transmittance, a void ratio of the porous carbon layer is preferably 10% to 40% and more preferably 15% to 35%.

From the viewpoint of mechanical strength and X-ray transmittance, a thickness of the porous carbon layer is preferably 3 mm to 15 mm and more preferably 5 mm to 10 mm.

The carbon fiber composite material layer included in the pallet is a layer containing a composite material (that is, a carbon fiber composite material) including a base material (that is, a matrix) and carbon fibers. The carbon fiber composite material layer is provided adjacent to the porous carbon layer.

Examples of the carbon fiber composite material constituting the carbon fiber composite material layer include carbon fiber reinforced plastic (CFRP) and carbon fiber reinforced carbon composite material (C/C composite).

Examples of the base material include a thermosetting resin (for example, an epoxy resin), and a carbonized product of the resin.

From the viewpoint of mechanical strength, a thickness of the carbon fiber composite material layer is preferably 10 mm to 25 mm. In addition, the carbon fiber composite material layer can also be made thin only in a region where X-rays are transmitted. In this case, from the viewpoint of X-ray transmittance, the above-described thickness is preferably 10 mm or less, and more preferably 5 mm to 10 mm.

The void portion provided in the pallet is connected to, for example, a vacuum pump (not shown) through an intake hole (not shown), and the inside of the void portion and the air pores of the porous carbon layer can be depressurized.

From the viewpoint of mechanical strength and X-ray transmittance, the total thickness of the pallet is preferably 5 mm to 50 mm, more preferably 20 mm to 50 mm, and still more preferably 25 mm to 35 mm.

The total thickness of the pallet herein refers to a distance from the contact surface with the collector foil (that is, the adsorption surface of the collector foil) to the opposite surface (that is, a back surface) thereof.

The total thickness of the pallet is measured, for example, with a caliper.

In the step A, the transport member in which a plurality of pallets are connected in one direction is used. The connection of the pallets will be described with reference to Fig. 3.

As shown in Fig. 3, a table 80, a rail 82 installed on the table 80, and a fixing member 84 which fixes the plurality of the pallets 10 are used for connecting the plurality of the pallets 10. The pallet 10 has a guide groove (not shown) on a back surface thereof. The plurality of the pallets 10 are placed on the table 80 by fitting the guide groove on the back surface of the pallet 10 to the rail 82. The respective pallets 10 are slid and moved in an arrow direction along the rail 82 to press and closely attach the pallets 10 to each other. Thereafter, the closely attached pallets 10 are fixed by the fixing member 84, and thus the transport member in which the plurality of the pallets 10 are connected in one direction is obtained.

### (Formation of electrode material film)

Next, a method of forming the electrode material film on the collector foil transported by the transport member in the step A will be described.

The method of forming the electrode material film on the collector foil is not limited as long as a continuous electrode material film having a desired thickness can be formed on the collector foil.

As the method of forming the electrode material film on the collector foil, for example, as shown in Fig. 1, a method of applying an electrode material 40 onto the collector foil being transported in the Z direction, and regulating a thickness of the electrode material 40 by a molding member 50 to form the electrode material film 42 is preferable.

Hereinafter, the method of forming the electrode material film 42 shown in Fig. 1 will be described in more detail.

As shown in Fig. 1, the molding member 50 is installed so as to maintain a constant distance from the surface of the transport member 20 or the surface of the collector foil 30 placed on the transport member 20. It is preferable that the molding member 50 is configured to maintain the constant distance even in a state in which the molding member 50 is in contact with the electrode material 40 and even in a state in which the collector foil 30 is transported and moved in the Z direction. That is, a pressure is applied to the molding member 50 so as to face a repulsive force (that is, a force which pushes back the molding member 50) from the electrode material 40 while maintaining the constant distance from the surface of the transport member 20 or the surface of the collector foil 30 placed on the transport member 20.

As shown in Fig. 1, the electrode material 40 supplied onto the collector foil 30 by an applying unit 48 forms a reservoir portion 46 between the collector foil 30 and the molding member 50; and in this state, the collector foil 30 is transported and moved in the Z direction by the transport member 20, so that the electrode material 40 passes through a gap between the surface of the molding member 50 and the surface of the collector foil 30 placed on the transport member 20. In a case where the electrode material 40 passes through the gap, the thickness of the electrode material 40 is regulated by the contact with the molding member 50, and the electrode material 40 is further applied onto the surface of the collector foil 30, whereby the electrode material film 42 formed of the electrode material 40 is formed on the collector foil 30.

It is preferable that a contact portion of the molding member 50 with the electrode material 40 vibrates. In a case where the contact portion of the molding member 50 with the electrode material 40 vibrates, the vibration propagates to the electrode material 40 and a shearing force is applied, so that the viscosity of the electrode material 40 may decrease and the fluidity may improve. As a result, as described above, at least the surface of the electrode material film 42 formed by being applied onto the collector foil 30 is leveled, and the electrode material film 42 with a small variation in thickness is easily formed.

In the method of forming the electrode material film 42, it is preferable to control a supply amount of the electrode material 40 onto the collector foil 30 and a formation amount of the electrode material film 42 such that the reservoir portion 46 of the electrode material 40 is formed between the collector foil 30 and the molding member 50, as described above.

As the unit for applying the electrode material onto the collector foil (for example, the applying unit 48 in Fig. 1), for example, a unit for intermittently or continuously supplying the electrode material onto the collector foil (for example, a hopper, a screw feeder, a disc feeder, a vibration feeder, or the like) can be used.

In addition, in a case where the electrode material is applied onto the collector foil, a regulating frame can also be used from the viewpoint of uniformizing the application of the electrode material.

The transporting and moving unit for the transport member is not particularly limited. For example, as shown in Fig. 3, the transport member in which the plurality of the pallets 10 are connected is transported by moving the table 80 on which the transport member has been placed, using a linear motion guide (LM guide) 90 or the like.

### [Step B]

In the step B, the connected pallets are spaced apart from each other to divide the laminate of the electrode material film and the collector foil for each one pallet.

In the step B, the long electrode material film formed in the step A is cut to a length of the pallet (specifically, a length of the pallet in the transport direction (Z direction in Fig. 1)) together with the collector foil.

In the step B, the connected pallets are spaced apart from each other, but the spacing condition may be appropriately determined depending on how easily the formed electrode material film collapses.

Examples of the spacing condition include a speed and an acceleration in a case where the pallets are spaced apart from each other.

It is preferable that the speed or the acceleration in a case of spacing the pallets is smaller, as the electrode material film easily collapses.

An example of spacing the pallets will be described with reference to Fig. 3.

For example, as shown in Fig. 3, in the transport member in which the plurality of the pallets 10 are connected and fixed on the table 80, after the laminate of the collector foil and the electrode material film is formed thereon, first, the fixation by the fixing member 84 is removed. Thereafter, the pallet 10 is slid and moved along the rail 82 one after another to space the pallets 10 apart from each other.

The spaced pallets are moved one by one from the table 80, and are moved to pass through the X-ray examination device in the step C described later.

### [Step C]

In the step C, the pallet on which the divided laminate of the collector foil and the electrode material film is placed is transported along the connection direction of the pallets, and the density and the thickness of the electrode material film are measured using the X-ray examination device.

In the step C, the laminate of the collector foil and the electrode material film is transported for each pallet divided in the step B, and the density and the thickness of the electrode material film are measured using the X-ray examination device on the transport path. That is, in the step C, X-ray examination is performed in-line by passing the pallet on which the laminate of the collector foil and the electrode material film is placed through the X-ray examination device installed on the transport path.

### (X-ray examination device)

The X-ray examination device is configured to include an X-ray source and a detection unit, and can obtain the density and the thickness of the electrode material film by irradiating the laminate placed on the pallet with X-rays and detecting X-rays transmitted through the laminate and the pallet.

Specific examples of the X-ray examination device include an X-ray examination device equipped with a photon sensor by a coating amount measurement system manufactured by Nordson Corporation, and an X-ray examination device described in JP2022-519242A.

A region where the detected dose of X-rays is large means that the density of the electrode material film is low or the thickness of the electrode material film is small; and a region where the detected dose of X-rays is small means that the density of the electrode material film is high or the thickness of the electrode material film is large.

That is, it can be determined that, as a difference (variation) in dose of X-rays in a film surface direction of the electrode material film is smaller, the in-plane uniformity of the density and the thickness of the electrode material film is excellent.

The X-ray transmissivity may vary depending on the types of the collector foil and the pallet. Therefore, in the X-ray examination device, it is preferable to perform at least one of changing irradiation intensity of the X-rays in a light emitting unit or changing sensitivity of the detection of the X-rays, according to the types of the collector foil and the pallet. In this way, the density and the thickness of the electrode material film can be accurately measured.

### (Feedback)

It is preferable that the information on the thickness and the density of the electrode material film, obtained by the X-ray examination device, provides feedback to at least one of the step A or the step B. By controlling one or more of various conditions in the step A and one or more of various conditions in the step B based on the feedback information, the in-plane uniformity of the density and the thickness of the electrode material film formed based on the controlled conditions is increased.

Specifically, it is preferable that at least one of a film forming condition for the electrode material film in the step A or a spacing condition between the pallets in the step B is controlled based on the feedback information. In this manner, in a manufacturing line to which the manufacturing method of an electrode layer according to the present disclosure is adopted, it is possible to obtain more electrode layers having excellent in-plane uniformity of the density and the thickness of the electrode material film.

Examples of the film forming condition of the electrode material film in the step A, which are controlled based on the feedback information, include the amount of the electrode material applied onto the collector foil, the distribution of the electrode material applied onto the collector foil, the transportation speed of the collector foil, the distance between the surface of the molding member and the surface of the transport member (the width of the gap), and the like.

In addition, examples of the spacing condition between the pallets in the step B, which is controlled based on the feedback information, include the speed and the acceleration in a case of spacing the pallets.

Specifically, in a case where it is found that, in a certain region on the pallet, the density of the electrode material film is low (or high) or the thickness of the electrode material film is small (or large) based on the information on the thickness and the density of the electrode material film, obtained by the X-ray examination device, it is preferable to control the adjustment of the distribution of the electrode material applied onto the collector foil, the adjustment of the distance between the surface of the molding member and the surface of the transport member in the width direction, the two-stage processing, and the like.

In addition, in a case where it is found that, in a region at an end part on the pallet, the density of the electrode material film is low or the thickness of the electrode material film is small based on the information on the thickness and the density of the electrode material film, obtained by the X-ray examination device, it is preferable to perform the control by performing a two-stage processing of supplying the electrode material again only to the end part of the electrode material film, such as increasing the amount of applying the electrode material onto a region (region on the collector foil) corresponding to the end part of the electrode material film.

The above-described two-stage processing will be described.

The two-stage processing refers to processing of forming the electrode material film on the collector foil, and then, as necessary, applying the electrode material onto the electrode material film. The two-stage processing is performed before the pallets are spaced apart from each other, that is, before the step B. In this case, the application of the electrode material onto the electrode material film may be performed by using the unit for applying the electrode material onto the collector foil (for example, the applying unit 48 in Fig. 1) twice, or by using another applying unit for the electrode material, different from the unit for applying the electrode material onto the collector foil. In the latter case, the unit for applying the electrode material onto the electrode material film may be arranged in series on a downstream side of the unit for applying the electrode material onto the collector foil in the transport direction of the transport member.

In the latter case, as the two-stage processing, for example, as shown in Fig. 1, a method of regulating the thickness of the electrode material 40 applied onto the collector foil 30 by the molding member 50 to form the electrode material film 42, and then applying the electrode material onto the electrode material film 42 by an applying unit (not shown) of the electrode material before the step B is performed can be used. In this case, after the electrode material is applied onto the electrode material film, the thickness of the electrode material may be restricted by another molding member.

In addition, in the former case, as the two-stage processing, as shown in Fig. 1, a method of regulating the thickness of the electrode material 40 applied onto the collector foil 30 by the molding member 50 to form the electrode material film 42, transporting the collector foil 30 having the electrode material film 42 in a direction opposite to the Z direction before the step B is performed, and applying the electrode material onto the electrode material film 42 again by the applying unit 48 can be used. In this case, after the electrode material is applied onto the electrode material film, the thickness of the electrode material is restricted again by the molding member 50.

The above-described feedback can be manually or automatically performed based on the information on the thickness and the density of the electrode material film, obtained by the X-ray examination device. In the latter case, it may be determined whether the density of the electrode material film in a certain region on the pallet is low or the thickness thereof is small, from the information on the thickness and the density of the electrode material film, obtained by the X-ray examination device. In a case where it is determined that the density of the electrode material film in a certain region on the pallet is low or the thickness thereof is small, any of the above-described controls is performed.

It is preferable that any of the above-described controls is performed in a case where the thickness or the density of the electrode material film, obtained by the X-ray examination device, exceeds ±5% with respect to a set thickness (target thickness) or density. In addition, it is desirable that the thickness or the density of the electrode material film after performing any of the above-described controls is adjusted to be ±3% or less with respect to the set thickness or density, and it is more desirable to be adjusted to be ±1% or less.

In this manner, the electrode material film is formed on the collector foil placed on the pallet.

### [Other steps]

The manufacturing method of an electrode layer according to the present disclosure may include other steps.

Examples of the other steps include a step of pressurizing the electrode material film.

### (Step of pressurizing electrode material film)

The manufacturing method of an electrode layer according to the present disclosure may include a step of pressurizing the electrode material film.

In a case where the manufacturing method of an electrode layer according to the present disclosure includes the pressurization step, a density of the electrode material can be increased, and a density of the solid components and in-plane uniformity of density and thickness can be achieved.

In the present step, for example, it is preferable that the electrode material film is pressurized by pressurizing the laminate placed on the pallet using a pressurization roller. In this case, it is preferable that a film is placed on the electrode material film, and then the laminate is pressurized by pressing the pressurization roller against the film.

In the present step, for example, a press machine may be used as the pressurizing unit. Furthermore, as the pressurizing unit, a vibrating pressurizing unit may be used.

In a case of pressurizing the laminate, a pressure is preferably 0.01 MPa to 100 MPa, more preferably 0.1 MPa to 50 MPa, and particularly preferably 0.2 MPa to 10 MPa.

In the present step, the laminate may be pressurized stepwise using a plurality of pressurizing units. By stepwise pressurizing the electrode material film using a plurality of pressurizing units, the density and thickness of the electrode material can be made more uniform.

In the present step, it is preferable to move the pressurizing unit and the electrode material film (specifically, the collector foil on which the electrode material film has been formed) relative to each other.

In the present disclosure, "move the pressurizing unit and the electrode material film relative to each other" includes moving the pressurizing unit in one direction with respect to the electrode material film, moving the electrode material film in one direction with respect to the pressurizing unit, and moving the pressurizing unit and the electrode material film in one direction, respectively; but it is preferable to move the electrode material film in one direction with respect to the pressurizing unit.

In the present step, from the viewpoint of improving formability, for example, the electrode material film heated at 30°C to 100°C may be pressurized.

Hereinafter, the collector foil and the molding member, which are used in the manufacturing method of an electrode layer according to the present disclosure, will be described in detail.

In addition, details of the electrode material (material including an electrode active material, a conductive auxiliary agent, an electrolytic solution, and the like) will also be described.

### [Collector foil]

The collector foil is not particularly limited, and known collector foils (a positive electrode collector foil and a negative electrode collector foil) can be used.

Examples of the positive electrode collector foil include foils (that is, metal layers) of aluminum, an aluminum alloy, stainless steel, nickel, and titanium. The positive electrode collector foil is preferably aluminum or an aluminum alloy. The positive electrode collector foil may be aluminum having, on a surface thereof, a coating layer containing one or more of carbon, nickel, titanium, silver, gold, platinum, and vanadium oxide.

Examples of the negative electrode collector foil include foils (that is, metal layers) of aluminum, copper, a copper alloy, stainless steel, nickel, and titanium. The negative electrode collector foil is preferably aluminum, copper, a copper alloy, or stainless steel, and more preferably copper or a copper alloy. The negative electrode collector foil may be copper or stainless steel, having, on a surface thereof, a coating layer containing one or more of carbon, nickel, titanium, silver, and lithium.

The collector foil is preferably an aluminum foil (including an aluminum foil having the above-described coating layer on the surface thereof) or a copper foil (including a copper foil having the above-described coating layer on the surface thereof). The aluminum foil is generally used as a collector foil in a positive electrode. The copper foil is generally used as a collector foil in a negative electrode.

In addition, the collector foil may be a laminate of the metal layer exemplified as the positive electrode collector foil or the negative electrode collector foil described above, and a resin film. Examples of the resin film used in the laminate include resin films such as a polyethylene terephthalate (PET) film, a polypropylene (PP) film, a polyethylene (PE) film, a cyclic olefin polymer (COP or COC) film, a triacetyl cellulose (TAC), a polyimide (PI) film, and a polyamide (PA) film.

In a case where the above-described laminate of the metal layer and the resin film is used, it is preferable that a surface of the metal layer, on which the electrode material film is formed, can be divided in a surface direction.

For example, a collector foil in which a plurality of metal layers (metal layers serving as the collector foil) having a desired size are arranged on a resin film to be spaced from each other, a resin film portion between the metal layers is bent toward a side opposite to the metal layer side, and the spaced metal layers are brought into contact with each other without a gap may be used. In such a collector foil, the metal layers in contact with each other without a gap can be divided as the distance between the pallets increases.

From the viewpoint of transportability and the like, a thickness of the collector foil (including the case of the laminate) is preferably 3 µm or more, more preferably 5 µm or more, and particularly preferably 10 µm or more.

From the viewpoint of flexibility and lightness, the thickness of the collector foil is preferably 100 µm or less, more preferably 70 µm or less, and particularly preferably 50 µm or less.

The thickness of the collector foil is an arithmetic average value of thicknesses at three points measured by cross-sectional observation. In the cross-sectional observation, a known microscope (for example, a scanning electron microscope) can be used.

### [Molding member]

Preferred examples of the molding member include a blade and a roller.

As described above, the blade and the roller as the molding member may vibrate in a case of coming into contact with the electrode material, and the electrode material can be vibrated by using the vibrating molding member.

### (Blade)

The blade is a member having a plate-like shape, but the shape, size, material, and the like of a contact portion which comes into contact with the electrode material may be appropriately determined depending on physical properties of the electrode material (the kind of the electrode active material, the concentration of solid components, the composition (viscosity, surface tension, and the like) of the electrolytic solution, and the like), the size and thickness of the electrode material film to be formed, and the like.

In addition, it is preferable that the contact portion of the blade with the electrode material is less likely to have the electrode material adhere thereto; and for example, at least the surface of the blade preferably exhibits releasability.

For example, the blade may be made of a fluororesin such as polytetrafluoroethylene (PTFE) or a resin such as polyether ether ketone (PEEK), may be made of a metal such as stainless steel, aluminum, iron, or a hard alloy, or may be made of a ceramic.

In addition, in order to impart the releasability to the surface, the blade may include a surface layer (for example, a surface layer containing a fluorine-based resin, and a surface layer containing silicon-based particles and a resin) exhibiting the releasability.

Furthermore, from the viewpoint of improving abrasion resistance, the blade may include a high-hardness coating film such as titanium oxide, titanium nitride (TiN), and tungsten carbide on a metal or ceramic blade body.

### (Roller)

The roller is a member in which an outer peripheral surface is rotatable, but the shape, size, material, and the like of the roller may be appropriately determined depending on the physical properties of the electrode material (the kind of the electrode active material, the concentration of solid components, the composition (viscosity, surface tension, and the like) of the electrolytic solution, and the like), the size and thickness of the electrode material film to be formed, and the like.

The material constituting the outer peripheral surface of the roller may be the same as that of the blade, and may have a surface layer exhibiting releasability.

An outer diameter of the roller is not particularly limited, but may be, for example, 20 mm to 30 mm.

In addition, since the roller rotates, a friction coefficient between the outer peripheral surface of the roller and the electrode material can be considered to be 0. However, as a result, since adhesiveness with the electrode material may be increased, it is preferable that a film is interposed between the electrode material and the outer peripheral surface of the roller.

### [Electrode material]

The electrode material contains an electrode active material, a conductive auxiliary agent, and an electrolytic solution, and may contain an additive as necessary.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the electrode layer can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

In the manufacturing method of an electrode layer according to the present disclosure, the amount of the positive electrode active material used is determined such that the content in the electrode material film is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material is preferably 30% by volume to 60% by volume, more preferably 35% by volume to 57% by volume, and still more preferably 45% by volume to 55% by volume.

In the manufacturing method of an electrode layer according to the present disclosure, the amount of the negative electrode active material used is determined such that the content in the electrode material film is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobiumbased oxide, and a lithium niobate-based compound.

### (Conductive auxiliary agent)

From the viewpoint of improving electron conductivity of the electrode active material, the electrode material film contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

In the manufacturing method of an electrode layer according to the present disclosure, the amount of the conductive auxiliary agent used is determined such that the content in the electrode material film is within the above-described range.

### (Electrolytic solution)

The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, and may be 50% by volume or less or 40% by volume or less. The lower limit of the content of the electrolytic solution with respect to the total volume of the electrode material is not limited, and may be 10% by volume or more or 30% by volume or more.

The content of the electrolytic solution with respect to the total volume of the electrode material is, for example, preferably 30% by volume to 50% by volume.

### (Solvent)

The electrode material film may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The solvent may be used alone or in combination of two or more kinds thereof.

A content of the liquid components (that is, the electrolytic solution and the solvent) with respect to the total volume of the electrode material is preferably 70% by volume or less, and may be 50% by volume or less or 40% by volume or less. The lower limit of the content of the liquid components with respect to the total volume of the electrode material is not limited, and may be 10% by volume or more or 30% by volume or more.

The content of the liquid components with respect to the total volume of the electrode material is preferably 30% by volume to 50% by volume.

The liquid component contained in the electrode material film, that is, the component in the electrode material film, which is in a liquid state at 25°C, is preferably in a liquid state even at -10°C and preferably in a liquid state even at -20°C. That is, the component in the electrode material film, which is in a liquid state at 25°C, is preferably a component which does not solidify at -10°C, and preferably a component which does not solidify at -20°C.

### (Other components)

The electrode material film may contain a binder, a dispersant, and other additives in addition to the above-described components. However, in the electrode material film, from the viewpoint of improving the energy density, it is preferable that a content of the binder is low, and it is more preferable that the binder is not contained.

Examples of the binder include a fluorine-containing resin, a hydrocarbon-based thermoplastic resin, an acrylic resin, and a urethane resin.

In addition, the dispersant may be a known dispersant which can disperse a dispersion target.

Furthermore, as the other additives, known additives added to the electrode can be used.

### <<Electrode layer>>

The electrode layer obtained by the manufacturing method of an electrode layer according to the present disclosure can be used as various electrodes. The electrode layer may be used as it is as a sheet electrode layer, or may be used as an electrode after further processing.

The sheet-like electrode layer is preferably an electrode layer of a semi-solid state secondary battery.

From the viewpoint of improving battery performance (for example, discharge capacity and output characteristics), the thickness of the electrode layer is preferably 50 µm to 500 µm, and the concentration of solid components is preferably 30% by volume to 90% by volume, same as in the above-described electrode material film.

The thickness of the electrode layer may be measured by the same method as the thickness of the electrode material film, or may be measured by the same method as the thickness of the collector foil.

In addition, the concentration of solid components in the electrode material film is calculated from a compositional ratio of each component contained in the electrode material film and a specific gravity of the components.

In addition, in a case where a positive electrode layer and a negative electrode layer are manufactured by the manufacturing method of an electrode layer according to the present disclosure, a battery can be obtained by bonding the obtained positive electrode layer and negative electrode layer to each other with a separator interposed therebetween.

### Examples

Hereinafter, the present disclosure will be described in detail with reference to Examples, but the present disclosure is not limited thereto.

Each step in each example described later was performed in a dry room (low-dew point room) at 22°C.

### [Preparation of positive electrode material (P1)]

(1) 13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith; 64 g of the obtained 115.7 g of the mixed solution was taken out, and used as an electrolytic solution X1.
(2) 2 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 revolutions per minute (rpm) for 30 seconds AWATORI RENTARO (manufactured by THINKY Corporation) to prepare a kneaded material Y1 (176 g).
(3) The electrolytic solution X1 (64 g) was added to the kneaded material Y1 (176 g), and the mixture was stirred at 1,500 rpm for 120 seconds with AWATORI RENTARO (manufactured by THINKY Corporation) to obtain a positive electrode material (P1).

The obtained positive electrode material (P1) was a Bingham plastic fluid having a yield value of 45 kPa, and a volume ratio of the solid components and the liquid components was 48:52.

### [Preparation of collector foil (S1)]

Collector foil (S1): PET film including a thermal fusion layer which contained an ethylene-vinyl acetate copolymer (EVA) and was bonded, by thermal fusion, to a back surface of a positive electrode collector foil (an aluminum foil, an average thickness: 20 µm, Ra: 0.5 µm, EAA-218D, a carbon-coated product manufactured by Korea JCC)
The Ra of the collector described above refers to an arithmetic average roughness Ra on a surface on which the electrode material film is formed.

### [Preparation of blade (B1)]

Blade (B1): blade made of stainless steel

### [Preparation of pallet (P1)]

Pallet (P1): pallet which was a laminate of a porous carbon layer as shown in Fig. 2, having a thickness of 5 mm, and a carbon fiber composite material layer having a thickness of 25 mm; a surface was a rectangle of 500 mm (width direction) × 150 mm (length direction); as shown in Fig. 2, there was a portion of a groove for supplying air.

### <Example 1>

An electrode material film was formed on a collector foil using the device shown in Fig. 1. The collector foil used in Example 1 was the collector foil (S1), and the electrode material was the positive electrode material (P1). In addition, the pallet (P1) was used as the pallet 10, and the blade (B1) was used as the molding member 50.

Specifically, the blade as the molding member 50 was installed so as to maintain a constant distance of 300 µm from the surface of the collector foil 30 placed on the transport member 20 formed by connecting the pallets 10.

The electrode material 40 was supplied onto the collector foil 30 to form the reservoir portion 46 of the electrode material 40, between the collector foil 30 and the molding member 50. Thereafter, the transport member 20 was moved in the Z direction to regulate the thickness of the electrode material 40 by the molding member, and thus the electrode material film 42 was formed on the collector foil 30.

The blade which was the molding member was vibrated by an exciter. An amplitude of the vibrating blade was 7 µm, and a period thereof was 300 Hz.

Next, the pallets 10 were spaced apart from each other at a speed of 10 mm/sec, and the laminate 60 of the collector foil 30 and the electrode material film 42 was divided for each one pallet.

Subsequently, the pallet 10 on which the divided laminate 62 of the collector foil 32 and the electrode material film 44 was placed was transported along the Z direction which was the connection direction of the pallets, and the density and the thickness of the electrode material film were measured using the X-ray examination device.

The density of the electrode material film obtained by the X-ray examination device was 2.76 g/cm³, and the thickness (average value) thereof was 310 µm. In addition, a concentration of solid components of the obtained electrode material film was 47% by volume, and no collapse was observed at the end part thereof.

As described above, an electrode layer having a width of 204 mm and a length of 146 mm was obtained.

In the information on the density and the thickness of the electrode material film, obtained by the X-ray examination device, it was found that a center portion of the electrode material film was approximately 17 µm thicker than the end part, and the thickness thereof was 325 µm.

Therefore, based on the information, the film forming conditions for the electrode material film were changed to conditions in which the amount of applying the electrode material onto the center portion of the collector foil was reduced by 5%. As a result, an electrode material film having a thickness (average value) of 310 µm and a thickness difference between the center and the end part in the width direction of less than 8 µm was formed.

### <Example 2>

An electrode material film was formed in the same manner as in Example 1, and the density and the thickness of the electrode material film were measured by the X-ray examination device.

The density of the electrode material film obtained by the X-ray examination device was 2.76 g/cm³, and the thickness (average value) thereof was 310 µm. In addition, a concentration of solid components of the obtained electrode material film was 47% by volume, and no collapse was observed at the end part thereof.

In the information on the density and the thickness of the electrode material film, obtained by the X-ray examination device, it was found that the end part of the electrode material film was approximately 15 µm thinner than the center portion, and the thickness thereof was 295 µm.

Therefore, based on the information, the film forming conditions for the electrode material film were changed to conditions in which the amount of applying the electrode material onto the end part of the collector foil was increased by 5%. As a result, an electrode material film having a thickness (average value) of 310 µm and a thickness difference between the center and the end part in the width direction of less than 6 µm was formed.

### <Evaluation for in-plane thickness uniformity>

The following information was obtained by measuring the thickness of the electrode material film (width: 204 mm, length: 146 mm) in each of Examples described above with an X-ray measuring device.

That is, the end part was removed, one line in the width direction was sampled every 0.5 mm, and the thicknesses of a total of 400 points were obtained to calculate an average value A thereof. In addition, the end part was removed, one line in the length direction was sampled every 1 mm, and the thicknesses of a total of 100 lines were obtained to calculate an average value B thereof.

By determining whether or not the obtained two average values A and B are within, for example, ±5% of a set target thickness, the in-plane uniformity of the thickness of the electrode material film could be grasped.

In addition, in a case where the density measurement information by the X-ray measuring device was used, the in-plane uniformity of the density of the electrode material film could also be grasped in the same manner as in the case where the thickness measurement information was used.

### (Explanation of References)

10: pallet
12: porous carbon layer
14: carbon fiber composite material layer
16: void portion
20: transport member
30: collector foil
32: divided collector foil
40: electrode material
42: electrode material film
44: divided electrode material film
46: reservoir portion of electrode material
48: applying unit of electrode material
50: molding member
60: laminate
62: divided laminate
70: X-ray examination device
80: table
82: rail
84: fixing member
90: LM guide
X: transport direction of support

The disclosure of JP2022-159831 filed on October 3, 2022 is incorporated in the present specification by reference.

All documents, patent applications, and technical standards described in the present specification are incorporated herein by reference to the same extent as in a case of being specifically and individually noted that individual documents, patent applications, and technical standards are incorporated herein by reference.

## Claims

1. A manufacturing method of an electrode layer, comprising:
a step A of forming an electrode material film on a collector foil, where the collector foil is transported using a transport member in which a plurality of pallets are connected in one direction, along a connection direction of the pallets;
a step B of spacing the connected pallets apart from each other to divide a laminate of the collector foil and the electrode material film for each one pallet; and
a step C of transporting the pallet on which the divided laminate of the collector foil and the electrode material film is placed along the connection direction of the pallets, and measuring a density and a thickness of the electrode material film using an X-ray examination device.

2. The manufacturing method of an electrode layer according to claim 1,
wherein the pallet is a laminate of a porous carbon layer in which one surface is a contact surface with the collector foil, and a carbon fiber composite material layer.

3. The manufacturing method of an electrode layer according to claim 1 or 2,
wherein a total thickness of the pallet is 5 mm to 50 mm.

4. The manufacturing method of an electrode layer according to claim 1,
wherein information on the thickness and the density of the electrode material film, obtained by the X-ray examination device, provides feedback to at least one of the step A or the step B.

5. The manufacturing method of an electrode layer according to claim 4,
wherein at least one of a film forming condition for the electrode material film in the step A or a spacing condition between the pallets in the step B is controlled based on the feedback information.

6. The manufacturing method of an electrode layer according to claim 1 or 2,
wherein the electrode material film contains an electrode active material, a conductive auxiliary agent, and an electrolytic solution, has a thickness of 50 µm to 500 µm, and has a concentration of solid components of 30% by volume to 90% by volume.
